# FASCICULE DE BREVET EUROPEEN

(11) **EP 3 902 895 B1**
(45) Date de publication et mention de la délivrance du brevet: **02.12.2026**
(21) Numéro de dépôt: 19801494.6
(22) Date de dépôt: 28.10.2019
(51) Int. Cl.: C10L 5/08, C10L 5/36, C10L 5/44, C10L 9/08

(54) **PROCÉDÉ DE FABRICATION EN CONTINU D'UNE MATIÈRE COMBUSTIBLE POUR CHAUDIÈRE INDUSTRIELLE, ET MATIÈRE CORRESPONDANTE**
VERFAHREN ZUR KONTINUIERLICHEN HERSTELLUNG EINES BRENNBAREN MATERIALS FÜR EINEN INDUSTRIEKESSEL UND ENTSPRECHENDES MATERIAL
METHOD FOR THE CONTINUOUS PRODUCTION OF A COMBUSTIBLE MATERIAL FOR AN INDUSTRIAL BOILER AND CORRESPONDING MATERIAL

(30) Priorité: 29.10.2018 FR 1860022; 20.05.2019 FR 1905269
(43) Date de publication de la demande: 03.11.2021
(73) Titulaire: Europeenne de Biomasse, 75009 Paris (FR)
(72) Inventeur: DESPRES, Jean-Luc, 51360 Verzenay (FR); QUINTERO-MARQUEZ, Adriana, 78110 Le Vesinet (FR); MARTEL, Frédéric, 51100 Reims (FR)
(74) Mandataire: Ermeneux, Bertrand
(86) Numéro de dépôt international: PCT/EP2019/079444
(87) Numéro de publication internationale: WO 2020/089187

(56) Documents cités:
- WO-A1-2015/185751
- WO-A1-2017/089648
- FR-A1- 3 037 075
- PETER BJÖRKLUND ET AL: "Steam exploded pellets for heat and power generation", VGB POWERTECH,, vol. 96, no. 4, 1 January 2016 (2016-01-01), pages 52 - 56, XP001596829, ISSN: 1435-3199
- BALLESTEROS I ET AL: "EFFECT OF CHIP SIZE ON STEAM EXPLOSION PRETREATMENT OF SOFTWOOD", APPLIED BIOCHEMISTRY AND BIOTECHNOLOGY ; PART A: ENZYME ENGINEERING AND BIOTECHNOLOGY, HUMANA PRESS INC, NEW YORK, vol. 84-86, 1 January 2000 (2000-01-01), pages 97 - 110, XP001010111, ISSN: 0273-2289, DOI: 10.1385/ABAB:84-86:1-9:97

## Description

### 1. Domaine de l'invention

Le domaine de l'invention est celui des combustibles à base de biomasse. Plus précisément, l'invention concerne un procédé de fabrication d'une matière combustible pour chaudière industrielle à partir de plaquettes de bois.

L'invention trouve également une application dans la fabrication de matière combustible pour fours industriels, et pour des chaudières et poêles domestiques.

### 2. Etat de la technique

On connait, par exemple des documents CA1141376, WO2006/006863, WO 2017/089648 ou de la publication par P. Björklund et al. : "Steam exploded pellets for heat and power generation",VGB POWERTECH,, vol. 96, no. 4, 2016, pages 52-56, des techniques de fabrication de granulés ou pellets à partir de matière lignocellulosique s'appuyant sur un procédé de « steam explosion ».

Certaines des techniques connues reposent sur une production de granulés en batch, dans un réacteur, qui est remplit puis vidé après avoir exposé de la matière lignocellulosique à de la vapeur sous pression pendant quelques dizaines de secondes à quelques minutes, voire quelques dizaines de minutes, et ensuite dépressurisé rapidement l'enceinte du réacteur.

Elles présentent l'inconvénient d'être complexes et couteuses à mettre en oeuvre du fait qu'il faut à chaque fournée vider le réacteur. Par ailleurs, lors de la détente la vapeur se refroidit de façon importante, et n'est plus utilisable.

### 3. Objectifs de l'invention

L'invention a donc notamment pour objectif de pallier les inconvénients de l'état de la technique cités ci-dessus.

Plus précisément l'invention a pour objectif de fournir une technique de fabrication d'une matière combustible qui limite les pertes de matière.

Un objectif de l'invention est également de fournir une technique de fabrication d'une matière combustible à partir de plaquettes de bois qui permette d'obtenir une matière combustible dont le pouvoir calorifique inférieur est supérieur ou égal à 5,29 MWh/t, et de préférence supérieur ou égal à 5,6 MWh/t.

L'invention a également pour objectif de fournir une technique de fabrication d'une matière combustible dont la productivité est élevée.

Un autre objectif de l'invention est de fournir une technique de fabrication d'une matière combustible à partir de plaquettes de bois qui permette d'obtenir une matière combustible dont la reprise en eau est limitée à 10% en masse.

Encore un objectif de l'invention est de fournir une technique de fabrication d'une matière combustible à partir de plaquettes de bois qui permette d'obtenir une matière combustible dont la perte de durabilité mécanique après 1 heure d'immersion est inférieure à 2% et/ou dont les pertes sous forme de poussières sont inférieures à 3%.

Un autre objectif de l'invention est de fournir une technique de fabrication d'une matière combustible à partir de plaquettes de bois qui permette d'obtenir une matière combustible dont la densité est supérieure ou égale à 650 kg/m³, et de préférence supérieure ou égale à 700 kg/m³.

L'invention a également pour objectif de fournir une technique de fabrication d'une matière combustible qui soit fiable, simple à mettre en œuvre et d'un coût de revient réduit.

### 4. Exposé de l'invention

Ces objectifs, ainsi que d'autres qui apparaitront par la suite sont atteints à l'aide d'un procédé de fabrication d'une matière combustible présentant un pouvoir calorifique supérieur ou égal à 5,29 MWh/t , destinée notamment à une chaudière industrielle, à partir de plaquettes de bois dont au moins 10% en masse est issue de bois de feuillus.

Selon l'invention un tel procédé comprend les étapes suivantes :
- obtention à partir desdites plaquettes de bois de fragments de bois présentant un taux d'humidité compris entre 5 et 25% ;
- introduction en continu d'un volume prédéterminée par minute desdits fragments de bois obtenus dans un réacteur sous pression, ledit réacteur étant alimenté en vapeur d'eau sensiblement saturée dont la pression est comprise entre 15,6 et 23,2 bars et la température est comprise entre 200 et 220°C dans le réacteur ;

- exposition des fragments de bois introduits dans ledit réacteur à ladite vapeur d'eau pendant une durée suffisante pour obtenir un vapocraquage comprise entre 5 et 9 mn, la valeur de ladite durée d'exposition et la valeur de la température de ladite vapeur sensiblement saturée étant sélectionnées de sorte que le facteur de sévérité soit compris entre 4,05 et 4,15 ;
- extraction en continu dudit réacteur d'un même volume prédéterminé de fragments de bois par minute, au travers d'au moins un orifice débouchant dans un conduit sensiblement à la pression atmosphérique, de sorte à provoquer une décompression explosive desdits fragments de bois extraits dudit réacteur dans ledit conduit
- séparation desdits fragments de bois décompressés et de la vapeur résiduelle extraite dudit réacteur, lesdits fragments de bois obtenus après séparation formant ladite matière combustible.

Ainsi, de façon inédite, l'invention propose de fabriquer de la matière combustible en continu en tirant partie d'un traitement par « steam explosion » grâce à de la vapeur dont la pression est comprise entre 15,6 et 23,2 bars et la température est comprise entre 200 et 220°C et pour une durée d'exposition à la vapeur comprise entre 5 et 9 minutes, les valeurs de la température et de la durée d'exposition étant choisies de sorte que le facteur de sévérité soit compris entre 4,05 et 4,15.

On obtient ainsi une matière combustible présentant un pouvoir calorifique supérieur ou égal à 5,29 MWh/t , quelle que soit la composition des plaquettes de bois, et avec une productivité convenable permettant une transformation de la matière en pellets tout en limitant les pertes de matière à moins de 8% en masse.

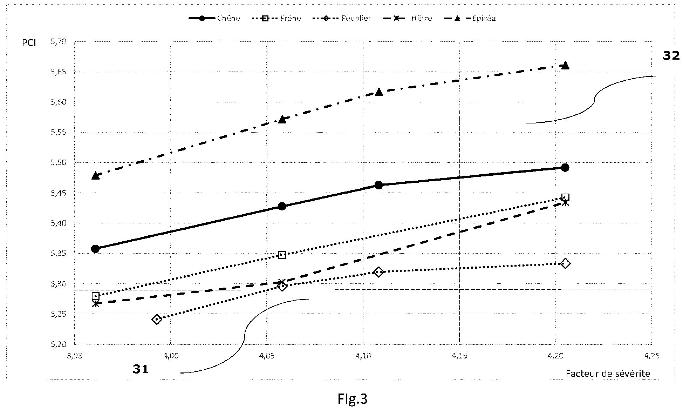

Les inventeurs ont en effet constaté, de façon surprenante et inattendue, qu'au-delà d'un facteur de sévérité de 4,05 on obtenait une matière combustible présentant un pouvoir calorifique inférieur (PCI) supérieur ou égal à 5,29 MWh/t à partir de toutes les essences de bois et quelle que soit l'espèce de bois. Par ailleurs, pour un facteur de sévérité inférieur ou égal à 4,15, la granulation de la matière sous forme de pellets est relativement aisée et la perte de masse reste inférieure à 8% quelle que soit l'espèce de bois. Au contraire pour un facteur de sévérité supérieur à 4,15, la matière s'avère trop déstructurée pour être transformée de façon convenable sous forme de pellets et/ou les pertes de matière sont trop importantes pour que la matière puisse être intéressante économiquement La figure 3 illustre les valeurs de PCI mesurées par les inventeurs pour de la matière combustible fabriquée à partir de différentes espèces de feuillus durs et tendres (chêne, frêne, hêtre, peuplier) ou de bois de résineux (épicéa) en fonction du facteur de sévérité du traitement dans le réacteur. Dans la zone 31 le pouvoir calorifique inférieur de la matière combustible fabriquée est inférieur à 3,29 MWh/t, ce qui peut s'avérer insuffisant pour une utilisation dans une chaudière industrielle. Dans la zone 32, correspond à un facteur de sévérité supérieur à 4,15, les inventeurs ont constaté que les pertes massiques de matière sont supérieures à 8% et/ou la granulation de la matière est difficile à obtenir.

Dans le cadre de l'invention, au moins 10% en masse des plaquettes est constitué de bois de feuillus. Il peut être envisagé d'utiliser un mélange de plaquettes de différents bois, feuillus ou résineux, sans sortir du cadre de l'invention.

On notera enfin que dans le cadre de l'invention, le facteur de sévérité FS se calcule de façon connue en soi à l'aide de la formule suivante : $FS = log \left({\int }_{0}^{Δ t} {e}^{\left(\frac{T - 100}{14 , 75}\right)} dt\right)$ avec T la température de la vapeur d'eau dans le réacteur (en °C) et Δt la durée d'exposition dans le réacteur (en minutes).

Selon un aspect particulier de l'invention, lesdites plaquettes de bois sont formées d'au moins 50% en masse de bois de feuillus.

Dans le cadre de l'invention, lesdites plaquettes de bois peuvent également être issues de bois de résineux, dans des proportions massiques moindres que les bois de feuillus.

Dans un mode de réalisation particulier de l'invention, lesdites plaquettes de bois sont formées d'au moins 70% en masse de bois de feuillus.

Dans un mode de réalisation particulier de l'invention, lesdites plaquettes de bois sont formées d'au moins 80% en masse de bois de feuillus.

Dans un mode de réalisation particulier de l'invention, lesdites plaquettes de bois sont formées d'au moins 90% en masse de bois de feuillus.

Dans un mode de réalisation particulièrement avantageux de l'invention, ladite durée d'exposition des fragments de bois à ladite vapeur d'eau dans le réacteur est comprise entre 6 et 8 minutes.

Dans un mode de réalisation particulièrement avantageux de l'invention, la température de ladite vapeur d'eau dans le réacteur est comprise entre 205 et 210°C.

Dans un mode de réalisation avantageux de l'invention, un procédé de fabrication tel que décrit ci-dessus comprend en outre une étape de transformation de ladite matière combustible en pellet.

Selon un aspect particulier de l'invention, les plaquettes de bois sont issues exclusivement de feuillus.

Selon un aspect préférentiel de l'invention, le taux d'humidité desdits fragments de bois obtenus est compris entre 8 et 12%.

Dans un mode de réalisation avantageux de l'invention, lors de l'étape d'exposition, la valeur de ladite durée d'exposition et la valeur de la température de ladite vapeur sensiblement saturée sont sélectionnées de sorte que le facteur de sévérité soit compris entre 4,05 et 4,10.

Dans un autre mode de réalisation avantageux de l'invention, lors de l'étape d'exposition, la valeur de ladite durée d'exposition et la valeur de la température de ladite vapeur sensiblement saturée sont sélectionnées de sorte que le facteur de sévérité soit compris entre 4,10 et 4,15.

Dans un mode de réalisation particulier de l'invention, lesdits fragments de bois sont majoritairement des fragments de bois de plus grande dimension comprise entre 0,5 et 14 mm.

Dans un mode de réalisation particulier de l'invention, au moins 80% de la masse desdits fragments de bois obtenus à partir des plaquettes de bois est composée de fragments de bois de plus grande dimension comprise entre 3,15 mm et 45mm.

Dans un mode de réalisation particulier de l'invention, moins de 0,5% de la masse desdits fragments de bois obtenus à partir des plaquettes de bois est composée de fragments de bois de plus grande dimension supérieure ou égale à 85mm.

Dans un mode de réalisation particulier de l'invention, moins de 1% de la masse desdits fragments de bois obtenus à partir des plaquettes de bois est composée de fragments de bois de plus grande dimension supérieure ou égale à 45mm.

Dans un mode de réalisation particulier de l'invention, moins de 5% de la masse desdits fragments de bois obtenus à partir des plaquettes de bois est composée de fragments de bois de plus grande dimension inférieure ou égale à 3,15mm.

Dans un mode de réalisation particulier de l'invention, lors de ladite étape d'extraction en continu dudit réacteur d'un même volume prédéterminé de fragments de bois par minute, l'extraction est mise en oeuvre au travers d'une pluralité d'orifices débouchant dans un conduit sensiblement à la pression atmosphérique
Selon un mode réalisation particulier de l'invention, ladite étape d'obtention de fragments de bois présentant un taux d'humidité compris entre 5 et 25% comprend une étape de broyage de plaquettes de bois naturel et/ou de plaquettes de bois de récupération et une étape de séchage desdites plaquettes de bois broyées.

Avantageusement, ladite étape d'introduction desdits fragments de bois dans le réacteur comprend une étape de compactage et de poussée desdits fragments à l'aide d'une vis.

Dans un mode de réalisation particulier de l'invention, ledit réacteur est un réacteur vertical et que lesdits fragments de bois introduits dans ledit réacteur sont entraînés vers une zone d'extraction proche du fond dudit réacteur sous l'effet de la gravité.

Dans un autre mode de réalisation particulier de l'invention, ledit réacteur est horizontal et en ce que l'étape d'exposition comprend une étape de transport desdits fragments entre une zone d'introduction et une zone d'extraction dans ledit réacteur.

De préférence, ladite étape de séparation comprend une étape de centrifugation desdits fragments de bois et/ou une étape de passage desdits fragments de bois et de la vapeur résiduelle dans un cyclone.

Dans un mode de réalisation particulier de l'invention, un procédé de fabrication tel que décrit ci-dessus comprend une étape d'humidification de la matière combustible afin d'améliorer sa capacité à être transformé en pellet.

Une installation de fabrication d'une matière combustible présentant un pouvoir calorifique inférieur supérieur ou égal à 5,29 MWh/t, destinée notamment à une chaudière industrielle, à partir de plaquettes de bois dont au moins 10% en masse est issue de bois de feuillus, comprend:
- des moyens de transformation desdites plaquettes de bois en fragments de bois présentant un taux d'humidité compris entre 5 et 25% ;
- des moyens de génération de vapeur d'eau sous pression sensiblement saturée dont la pression est comprise entre 15,6 et 23,2 bars et la température est comprise entre 200 et 220°C ;
- un réacteur sous pression présentant des orifices pour l'extraction de fragments de bois et des moyens d'introduction en continu d'un volume prédéterminée par minute desdits fragments de bois dans ledit réacteur, ledit réacteur étant configuré de sorte que des fragments de bois introduits dans ledit réacteur puissent séjourner dans le réacteur pendant une durée comprise entre 5 et 9 mn;

- des moyens d'alimentation dudit réacteur avec la vapeur d'eau générée par lesdits moyens de génération ;
- des moyens d'introduction en continu d'un volume prédéterminée par minute desdits fragments de bois dans ledit réacteur ;
- des moyens d'extraction en continu dudit réacteur d'un même volume prédéterminé de fragments de bois par minute ;
- un conduit sensiblement à la pression atmosphérique dans lequel débouchent lesdits orifices ;
- des moyens de séparation desdits fragments de bois décompressés et de la vapeur résiduelle extraite dudit réacteur, lesdits fragments de bois obtenus après séparation formant ladite matière combustible ;
ledit réacteur, lesdits moyens d'introduction en continu et d'extraction en continu étant configurés les uns par rapport aux autres de sorte que le facteur de sévérité du traitement dans le réacteur soit compris entre 4,05 et 4,15.

L'invention concerne aussi une matière combustible obtenue par la mise en œuvre du procédé décrit ci-dessus présentant une augmentation en masse inférieure ou égale à 10% après immersion complète dans un récipient d'eau pendant une heure et égouttage pendant 30mn.

La matière combustible obtenue par la mise en œuvre du procédé de fabrication d'une matière combustible tel que décrit ci-dessus peut présenter un pouvoir calorifique inférieur supérieur ou égal à 5,6 MWh/t.

### 5. Liste des figures

D'autres caractéristiques et avantages de l'invention apparaitront plus clairement à la lecture de la description suivante d'un mode de réalisation de l'invention, donné à titre de simple exemple illustratif et non limitatif, et des dessins annexés parmi lesquels :
- La figure 1 est une représentation sous forme d'un exemple de mode de réalisation d'une installation de fabrication d'une matière combustible selon l'invention ;

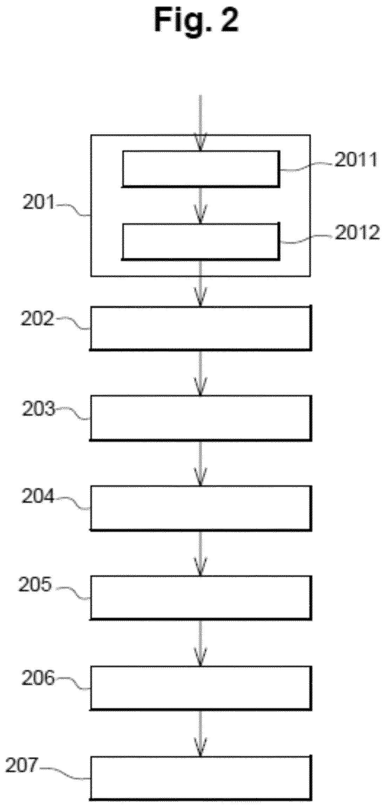

- La figure 2 illustre de façon synoptique, les étapes d'un autre exemple de mode de réalisation d'un procédé de fabrication d'une matière combustible selon l'invention, sous forme de diagramme ;
- La figure 3 illustre les variations du PCI d'une matière combustible fabriquée exclusivement à partir de plaquettes de chêne, de frêne, de hêtre, de peuplier ou d'épicéa en fonction du facteur de sévérité dans le réacteur.

### 6. Description détaillée de l'invention

### Exemple de mode de réalisation de l'invention

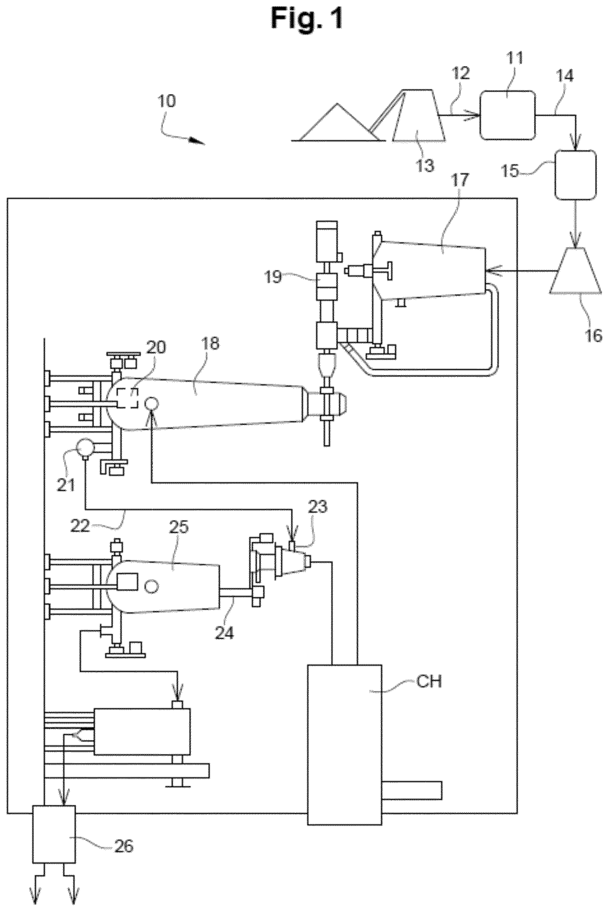

On a illustré sur la figure 1 un exemple de mode de réalisation d'une installation 10 de fabrication d'une matière combustible selon l'invention à partir de plaquettes de bois.

Dans ce mode de réalisation particulier de l'invention les plaquettes de bois mis en œuvre sont des plaques de bois de chêne et de hêtre. Dans des variantes de ce mode de réalisation de l'invention, il peut être envisagé de mettre en œuvre des plaquettes de bois naturel de toute essence convenable, tels que des bois de feuillus durs, des bois résineux, par exemple de l'épicéa, ... et/ou de bois de récupération, tel que des bois de classe A ou de classe B.

Cette installation 10 comprend un broyeur à marteaux 11 alimenté en plaquettes de bois à l'aide d'une vis sans fin 12 qui prélève les plaquettes dans un silo à échelles 13. Un séparateur de gros bois élimine les éléments hors dimensions avant que les plaquettes n'entrent dans le broyeur 11. Dans ce broyeur humide 11, les plaquettes de bois sont broyées sous la forme de fragments de bois de plus grande dimension comprise majoritairement entre 4 et 6 millimètres. Le remplissage du silo 13 est assuré par une chargeuse à godet qui prélève des plaquettes dans des tas formés sur des zones de stockage au sol.

Dans une variante de ce mode de réalisation particulier de l'invention, il peut être prévu de mettre en œuvre une ligne automatisée qui écorce et broie directement des rondins de bois, sous forme de fragments de bois, équipée d'un convoyeur pour le chargement du silo.

Ces fragments de bois se déversent en sortie du broyeur 11 sur un tapis convoyeur 14, équipé d'une bande peseuse, qui les transporte vers la trémie d'alimentation d'un sécheur à air chaud 15 à basse température. Dans ce mode de réalisation de l'invention, la température de l'air chaud du sécheur est sensiblement égale à 80°C. Dans des variantes de ce mode de réalisation, la température de l'air chaud peut être comprise entre 70°C et 75°C, entre 75 et 80°C ou entre 80 et 85°C.

Ce sécheur 15 est dans ce mode de réalisation particulier de l'invention un sécheur à bande double couche. Les fragments entrants dans le sécheur sont répartis de manière homogène par une première vis d'alimentation sur une bande. La couche de fragments de bois formée est transportée à travers le sécheur sur la bande avant de se décharger sur la première vis de déchargement. Au moyen d'un convoyeur à vis supplémentaire, les fragments de bois sont transférés vers une deuxième vis d'alimentation qui vient déposer une seconde couche sur la première dans le sécheur. Après avoir parcouru une deuxième fois la moitié du sécheur, les fragments de bois séchés, dont le taux d'humidité est désormais inférieur à 10%, sont séparés, déchargés et convoyés vers un silo de stockage tampon 16.

Un capteur d'humidité contrôle en continu la teneur en humidité des fragments de bois en sortie du sécheur et la vitesse d'avancement de la bande est régulée automatiquement afin de maintenir le taux d'humidité des fragments de bois constant en sortie du sécheur.

Dans le sécheur, des ventilateurs d'extraction aspirent l'air ambiant à travers des échangeurs de chaleur dans lesquels l'air est chauffé en deux étapes avant de le souffler sur les fragments de bois. Grâce à ce flux d'air, les fragments de bois sont plaqués sur la bande et très peu de poussières s'en échappent. Les échangeurs de chaleur sont des échangeurs eau/air, dans lesquels circulent de l'eau chaude provenant d'une installation de cogénération.

Dans des variantes de ce mode de réalisation de l'invention, il peut également être envisagé de mettre en œuvre un sécheur à tambour rotatif.

On notera que dans le silo tampon se produit une homogénéisation partielle du taux d'humidité des fragments de bois séchés.

Les fragments de bois séchés sont extraits du silo 16 par une vis planétaire et déposé sur un tapis convoyeur qui les transporte jusqu'à un silo d'alimentation 17 d'un réacteur 18 permettant de traiter 15 tonnes par heure de fragments de bois en continu.

Le réacteur 18 est un réacteur sous pression dans lequel on injecte de la vapeur d'eau surchauffée dont la pression est de 19 bars et la température est de 250°C par sa partie inférieure. Ce réacteur orienté verticalement est de forme conique afin d'éviter la formation de bouchons. Le flux de vapeur est extrait hors du réacteur au niveau de la partie supérieure du réacteur. En sortie du réacteur, la vapeur est renvoyée vers la chaudière CH dans laquelle elle a été produite.

On notera que dans le réacteur 18 la température de la vapeur est de 209°C et la pression de 18,7 bars.

Le silo 17 est en forme d'une ellipsoïde tronquée, afin de faciliter l'écoulement des fragments de bois.

Par ailleurs, dans le silo 17, un racleur rotatif permet de pousser les fragments de bois vers une vis sans fin d'extraction 19.

Cette vis sans fin 19 conique, dont la section s'amenuise à mesure que la vis pénètre dans le réacteur 18, prélève en continu une quantité prédéterminée de fragments de bois séchés dans le silo 17, la pré-comprime et la pousse dans le réacteur 18 sous pression au travers d'un orifice de passage de la vis. Les dimensions de l'orifice conique et de la vis ont été sélectionnées l'une par rapport à l'autre de façon à minimiser la perte de pression dans le réacteur et expulser l'air contenu dans les fragments de bois.

On notera que l'effort de compression exercée par la vis sur les fragments permet avantageusement d'expulser une partie de l'eau résiduelle présente dans les fragments de bois.

A l'extrémité de la vis 19, les fragments de bois compactés forment un bloc compact qui se disperse dans le réacteur sous l'effet du flux de vapeur.

Les fragments de bois dispersés tombent alors par gravité dans le réacteur en étant réchauffés par le flux de vapeur et se déposent sur les fragments qui se sont accumulés avant eux sur le fond du réacteur, où ils continuent à être réchauffés par le flux de vapeur.

Il convient de noter que dans le réacteur 18 le temps de rétention des fragments de bois est contrôlé en fonction du niveau des fragments de bois qui se sont accumulés sur le fond du réacteur. Dans ce mode de réalisation particulier de l'invention, il est fixé à 7,5 minutes, ce qui correspond à un facteur de sévérité de 4,08.

Sur le fond du réacteur 18, un racleur monté pivotant sur un axe vertical (non représenté sur la figure 1) repousse les fragments de bois vers une vis sans fin 20 permettant d'extraire des fragments de bois du réacteur 18.

Cette vis de décharge 20 pousse les fragments de bois hors du réacteur vers une vanne 21 à ouverture contrôlée. L'ouverture de cette vanne est ajustée en permanence afin de contrôler le débit de fragments de bois extraits du réacteur en continu.

Sous la poussée de la vapeur présente dans le réacteur et/ou de la vis 20, des fragments de bois sont expulsés en continu au travers des ouvertures des vannes 21, à très grande vitesse, dans une ligne de détente 22 et sont entrainés par le flux de vapeur sortant avec ces fragments de bois du réacteur dans la ligne de détente 22 jusqu'à une unité de séparation 23.

On notera que dans la ligne de détente la pression diminue progressivement jusqu'à atteindre une pression d'environ 1,1 bar au niveau du séparateur. Il se produit ainsi une décompression explosive des fragments de bois, du fait d'une re-vaporisation d'une partie de l'eau de condensation présente dans les fragments de bois. Cette expansion brutale de la vapeur d'eau entraîne l'apparition de forces de cisaillement dans l'ensemble des fragments de bois, qui provoque l'éclatement mécanique de la structure de ce dernier.

Dans des variantes de ce mode de réalisation de l'invention, la pression atteinte au niveau du séparateur est égale à 1,2, 1,3, 1,4, ou 1,5 bar.

Dans l'unité de séparation 23, le mélange de fragments de bois et de vapeur pénètre tangentiellement à une pale à rotation rapide. Sous l'effet de la force centrifuge générée par cette pale, les fragments de bois sont projetés dans un conduit de décharge 24, tandis que la vapeur est rejetée hors du séparateur au travers d'une soupape.

Dans une variante de ce mode de réalisation de l'invention, il peut être prévu de mettre en œuvre un cyclone mis sous pression pour séparer les fragments de bois de la vapeur résiduelle.

On notera que la vapeur rejetée contient des matières volatiles qui pourront avantageusement être brulés dans une chaudière.

Les fragments de bois projetés dans un conduit de décharge 24 se déversent dans un silo de stockage 25, en vue d'être transformés sous forme de pellets de diamètre sensiblement égal à 7 millimètres et de longueur moyenne égale à 22 millimètres.

Pour cela ils sont acheminés à l'aide d'un convoyeur à chaine, ou d'un convoyeur pneumatique, vers une presse à granuler 26 où ils sont compactés sous forme de pellets.

Les pellets obtenus sont ensuite dirigés vers un poste de chargement en vrac de camions ou vers un poste d'ensachage-palettisation.

Ces pellets ont un Pouvoir Calorifique Inférieur égal à 5,295 MWh/t et une densité égale à 710 kg/m³. Ils présentent une augmentation en masse de 9,5 % après immersion complète dans un récipient d'eau pendant une heure, puis égouttage pendant 30mn
Dans une variante de ce mode de réalisation particulier de l'invention, les fragments de bois obtenus après séparation peuvent être utilisés directement comme matière combustible dans une chaudière industrielle.

### Autre exemple de mode de réalisation de l'invention

On a représenté sous forme de diagramme-bloc les étapes d'un exemple de procédé de fabrication d'une matière combustible pour four industriel à partir de plaquettes de bois selon l'invention.

Dans une première étape 201, des fragments de bois de plus grande dimension égale à 5 millimètres sont produits à partir de plaquettes de bois de chêne écorcé. Lors de cette étape, les plaquettes de bois sont broyées dans un broyeur humide (étape 2011) puis les fragments de bois obtenus après broyage sont séchés dans un sécheur (étape 2012) jusqu'à ce qu'il présente un taux d'humidité d'environ 22 %.

Dans une étape 202, un volume de 0,32 m³ de fragments de bois séchés est introduit en continu à l'aide d'une vis dans un réacteur sous pression alimenté en vapeur d'eau légèrement surchauffée dont la pression est égale à 19 bars.

Dans le réacteur, les fragments de bois sont exposés à un flux de vapeur d'eau pendant une durée de 8 minutes (étape 203).

Ils sont ensuite extraits en continu au travers d'orifices ou de vannes dans un conduit de détente (étape 204) et transporté dans ce conduit par la vapeur sortant du réacteur jusqu'à un cyclone, où les fragments de bois vont être séparés de la vapeur résiduelle (étape 205).

Les fragments de bois récoltés à la sortie du séparateur sont ensuite séchés jusqu'à ce que leur taux humidité atteigne 10% (étape 206) avant d'être compactés sous forme de pellets (étape 207) destinés à être utilisés comme combustible dans un four industriel.

### Autres caractéristiques et avantages de l'invention

Dans des variantes des modes de réalisation de l'invention présentés ci-dessus, il peut également être prévu :
- de procéder à une humidification des fragments de bois obtenus après séparation afin de faciliter la granulation ;
- de mettre en œuvre un réacteur s'étendant horizontalement et des moyens de transport des fragments dans le réacteur entre la zone d'introduction et la zone d'extraction, comprenant par exemple une vis convoyeuse.

## Revendications

1. Procédé de fabrication d'une matière combustible présentant un pouvoir calorifique inférieur supérieur ou égal à 5,29 MWh/t, destinée notamment à une chaudière industrielle, à partir de plaquettes de bois dont au moins 10% en masse est issue de bois de feuillus, **caractérisé en ce qu'**il comprend les étapes suivantes :
- obtention à partir desdites plaquettes de bois de fragments de bois présentant un taux d'humidité compris entre 5 et 25% ;
- introduction en continu d'un volume prédéterminée par minute desdits fragments de bois obtenus dans un réacteur sous pression, ledit réacteur étant alimenté en vapeur d'eau sensiblement saturée dont la pression est comprise entre 15,6 et 23,2 bars et la température est comprise entre 200 et 220°C dans le réacteur ;
- exposition des fragments de bois introduits dans ledit réacteur à ladite vapeur d'eau pendant une durée suffisante pour obtenir un vapocraquage comprise entre 5 et 9 minutes, la valeur de ladite durée d'exposition et la valeur de la température de ladite vapeur sensiblement saturée étant sélectionnées de sorte que le facteur de sévérité FS soit compris entre 4,05 et 4,15, ledit facteur de sévérité FS s'exprimant sous la forme : $FS = log \left({\int }_{0}^{Δ t} {e}^{\left(\frac{T - 100}{14 , 75}\right)} dt\right)$ avec T la température de la vapeur d'eau dans le réacteur (en °C) et Δt la durée d'exposition dans le réacteur (en minutes) ;
- extraction en continu dudit réacteur d'un même volume prédéterminé de fragments de bois par minute, au travers d'au moins un orifice débouchant dans un conduit sensiblement à la pression atmosphérique, de sorte à provoquer une décompression explosive desdits fragments de bois extraits dudit réacteur dans ledit conduit ;
- séparation desdits fragments de bois décompressés et de la vapeur résiduelle extraite dudit réacteur, lesdits fragments de bois obtenus après séparation formant ladite matière combustible.

2. Procédé selon la revendication 1, **caractérisé en ce que** lesdites plaquettes de bois contiennent au moins 50% en masse de bois de feuillus.

3. Procédé selon la revendication 2, **caractérisé en ce que** lesdites plaquettes de bois contiennent au moins 80% en masse de bois de feuillus.

4. Procédé selon la revendication 2, **caractérisé en ce que** lesdites plaquettes de bois sont issues sensiblement exclusivement de bois de feuillus.

5. Procédé selon la revendication 1 à 4, **caractérisé en ce que** ladite durée d'exposition des fragments de bois à ladite vapeur d'eau dans le réacteur est comprise entre 6 et 8 minutes

6. Procédé selon l'une quelconque des revendications 1 à 5, **caractérisé en ce que** la température de ladite vapeur d'eau dans le réacteur est comprise entre 205 et 210°C.

7. Procédé selon l'une quelconque des revendications 1 à 6, **caractérisé en ce qu'**il comprend en outre une étape de transformation de ladite matière combustible en pellet.

8. Procédé selon l'une quelconque des revendications 1 et 7, **caractérisé en ce que** le taux d'humidité desdits fragments de bois obtenus est compris entre 8 et 12%.

9. Procédé selon l'une 'quelconque des revendications 1 à 8, **caractérisé en ce que** ladite étape d'obtention de fragments de bois présentant un taux d'humidité compris entre 5 et 25% comprend une étape de broyage de plaquettes de bois naturel et/ou de plaquettes de bois de récupération et une étape de séchage desdites plaquettes de bois broyées.

10. Procédé selon l'une quelconque des revendications 1 à 9, **caractérisé en ce que** ladite étape d'introduction desdits fragments de bois dans le réacteur comprend une étape de compactage et de poussée desdits fragments à l'aide d'une vis.

11. Procédé selon l'une quelconque des revendications 1 à 10, **caractérisé en ce que** ledit réacteur est un réacteur vertical et que lesdits fragments de bois introduits dans ledit réacteur sont entraînés vers une zone d'extraction proche du fond dudit réacteur sous l'effet de la gravité.

12. Procédé selon l'une quelconque des revendications 1 à 11, **caractérisé en ce que** ledit réacteur est horizontal et **en ce que** l'étape d'exposition comprend une étape de transport desdits fragments entre une zone d'introduction et une zone d'extraction dans ledit réacteur.

13. Procédé selon l'une quelconque des revendications 1 à 12, **caractérisé en ce que** ladite étape de séparation comprend une étape de centrifugation desdits fragments de bois et/ou une étape de passage desdits fragments de bois et de la vapeur résiduelle dans un cyclone.

14. Procédé selon l'une quelconque des revendications 1 à 13, **caractérisé en ce qu'**il comprend une étape d'humidification de la matière combustible afin d'améliorer sa capacité à être transformé en pellets.

15. Matière combustible obtenue par la mise en œuvre du procédé selon la revendication 5 présentant une augmentation en masse inférieure ou égale à 10% après immersion complète dans un récipient d'eau pendant une heure et égouttage pendant 30mn.

## Patentansprüche

1. Verfahren zum Herstellen eines Brennstoffmaterials, das einen unteren Heizwert von größer als oder gleich 5,29 MWh/t aufweist, das insbesondere für einen Industriekessel vorgesehen ist, aus Holzschnitzeln, von denen mindestens 10 Massen-% aus Laubholz stammen, **dadurch gekennzeichnet, dass** es die folgenden Schritte umfasst:
- Erhalten, aus den Holzschnitzeln, von Holzfragmenten, die einen Feuchtigkeitsgehalt aufweisen, der zwischen 5 und 25 % liegt;
- kontinuierliches Einführen eines vorbestimmten Volumens pro Minute der erhaltenen Holzfragmente in einen druckbeaufschlagten Reaktor, wobei der Reaktor mit im Wesentlichen gesättigtem Wasserdampf gespeist wird, dessen Druck zwischen 15,6 und 23,2 bar liegt und die Temperatur in dem Reaktor zwischen 200 und 220 °C liegt;
- Aussetzen der Holzfragmente, die in den Reaktor eingebracht werden, gegenüber dem Wasserdampf für eine Dauer, die zum Erhalten eines Dampfkrackens ausreichend ist, die zwischen 5 und 9 Minuten liegt, wobei der Wert der Aussetzungsdauer und der Wert der Temperatur des im Wesentlichen gesättigten Dampfes ausgewählt sind, sodass der Schärfegrad FS zwischen 4,05 und 4,15 liegt, wobei der Schärfegrad FS in folgender Form ausgedrückt wird: 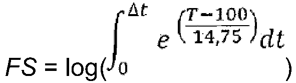 wobei T die Temperatur des Wasserdampfs in dem Reaktor (in °C) und Δt die Aussetzungsdauer in dem Reaktor (in Minuten) ist;
- kontinuierliches Entnehmen aus dem Reaktor eines gleichen vorbestimmten Volumens von Holzfragmenten pro Minute durch mindestens eine Öffnung, die in eine Leitung mündet, die im Wesentlichen unter Atmosphärendruck steht, sodass eine explosive Dekompression der Holzfragmente, die aus dem Reaktor entnommen werden, in der Leitung bewirkt wird;
- Abscheiden der dekomprimierten Holzfragmente und des Restdampfes, der aus dem Reaktor entnommen wird, wobei die Holzfragmente, die nach der Abscheidung erhalten werden, das brennbare Material ausbilden.

2. Verfahren nach Anspruch 1, **dadurch gekennzeichnet, dass** die Holzschnitzel mindestens zu 50 Massen-% Laubholz enthalten.

3. Verfahren nach Anspruch 2, **dadurch gekennzeichnet, dass** die Holzschnitzel mindestens zu 80 Massen-% Laubholz enthalten.

4. Verfahren nach Anspruch 2, **dadurch gekennzeichnet, dass** die Holzschnitzel im Wesentlichen ausschließlich aus Laubholz stammen.

5. Verfahren nach Anspruch 1 bis 4, **dadurch gekennzeichnet, dass** die Aussetzungsdauer der Holzfragmente gegenüber dem Wasserdampf in dem Reaktor zwischen 6 und 8 Minuten liegt.

6. Verfahren nach einem der Ansprüche 1 bis 5,
**dadurch gekennzeichnet, dass** die Temperatur des Wasserdampfs in dem Reaktor zwischen 205 und 210 °C liegt.

7. Verfahren nach einem der Ansprüche 1 bis 6,
**dadurch gekennzeichnet, dass** es ferner einen Schritt zum Umwandeln des brennbaren Materials in Pellets umfasst.

8. Verfahren nach einem der Ansprüche 1 und 7,
**dadurch gekennzeichnet, dass** der Feuchtigkeitsgehalt der erhaltenen Holzfragmente zwischen 8 und 12 % liegt.

9. Verfahren nach einem der Ansprüche 1 bis 8,
**dadurch gekennzeichnet, dass** der Schritt des Erhaltens von Holzfragmenten, die einen Feuchtigkeitsgehalt zwischen 5 und 25 % aufweisen, einen Schritt des Zerkleinerns von Naturholzschnitzeln und/oder Altholzholzschnitzeln und einen Schritt des Trocknens der zerkleinerten Holzschnitzel umfasst.

10. Verfahren nach einem der Ansprüche 1 bis 9,
**dadurch gekennzeichnet, dass** der Schritt des Einbringens der Holzfragmente in den Reaktor einen Schritt des Verdichtens und Vorschiebens der Fragmente mittels einer Schnecke umfasst.

11. Verfahren nach einem der Ansprüche 1 bis 10,
**dadurch gekennzeichnet, dass** der Reaktor ein vertikaler Reaktor ist und dass die Holzfragmente, die in den Reaktor eingeführt werden, zu einem Entnahmebereich hin, nahe dem Boden des Reaktors, unter der Einwirkung der Schwerkraft befördert werden.

12. Verfahren nach einem der Ansprüche 1 bis 11,
**dadurch gekennzeichnet, dass** der Reaktor horizontal ist und dadurch, dass der Aussetzungsschritt einen Schritt des Transportierens der Fragmente zwischen einem Einbringungsbereich und einem Entnahmebereich in dem Reaktor umfasst.

13. Verfahren nach einem der Ansprüche 1 bis 12,
**dadurch gekennzeichnet, dass** der Schritt des Abscheidens einen Schritt des Zentrifugierens der Holzfragmente und/oder einen Schritt des Leitens der Holzfragmente und des Restdampfes in einen Fliehkraftabscheider umfasst.

14. Verfahren nach einem der Ansprüche 1 bis 13,
**dadurch gekennzeichnet, dass** es einen Schritt des Befeuchtens des brennbaren Materials umfasst, um dessen Fähigkeit, in Pellets umgewandelt zu werden, zu verbessern.

15. Brennbares Material, erhalten durch das Durchführen des Verfahrens nach Anspruch 5, das eine Massenzunahme von kleiner als oder gleich 10 % nach vollständigem Eintauchen in einen Wasserbehälter für eine Stunde und Abtropfen für 30 min. aufweist.

## Claims

1. Method for manufacturing a combustible material having a heating value of less than, greater than or equal to 5.29 MWh/t, intended in particular for an industrial boiler and from wood chips of which at least 10% by weight is from hardwood, **characterized in that** the method comprises the following steps:
- obtaining, from said wood chips, wood fragments having a moisture content between 5 and 25%;
- continuously introducing a predetermined volume per minute of said obtained wood fragments into a pressurized reactor, said reactor being supplied with substantially saturated water vapor, the pressure of which is between 15.6 and 23.2 bar and the temperature of which is between 200 and 220°C within the reactor;
- exposing the wood fragments introduced into said reactor to said water vapor for a time, sufficient to achieve steam explosion, of between 5 and 9 minutes, the value of said exposure time and the value of the temperature of said substantially saturated vapor being selected so that the severity factor FS is between 4.05 and 4.15, said severity factor FS being expressed as: $FS = log \left({\int }_{0}^{Δ t} {e}^{\left(\frac{T - 100}{14.75}\right)} dt\right)$ where T is the temperature of the water vapor in the reactor (in °C) and Δt is the exposure time in the reactor (in minutes);
- continuously extracting from said reactor the same predetermined volume of wood fragments per minute through at least one opening leading into a pipe which is substantially at atmospheric pressure, so as to cause an explosive decompression within said pipe of said wood fragments extracted from said reactor;
- separating said decompressed wood fragments and the residual vapor extracted from said reactor, said wood fragments obtained after separation forming said combustible material.

2. Method according to claim 1, **characterized in that** said wood chips contain at least 50% by weight of hardwood.

3. Method according to claim 2, **characterized in that** said wood chips contain at least 80% by weight of hardwood.

4. Method according to claim 2, **characterized in that** said wood chips are substantially exclusively from hardwood.

5. Method according to claim 1 to 4, **characterized in that** said exposure time of the wood fragments to said water vapor in the reactor is between 6 and 8 minutes.

6. Method according to any of claims 1 to 5, **characterized in that** the temperature of said water vapor in the reactor is between 205 and 210°C.

7. Method according to any of claims 1 to 6, **characterized in that** it further comprises a step of converting said combustible material into pellets.

8. Method according to any of claims 1 and 7, **characterized in that** the moisture content of said obtained wood fragments is between 8 and 12%.

9. Method according to any of claims 1 to 8, **characterized in that** said step of obtaining wood fragments having a moisture content between 5 and 25% comprises a step of grinding natural wood chips and/or reclaimed wood chips and a step of drying said ground wood chips.

10. Method according to any of claims 1 to 9, **characterized in that** said step of introducing said wood fragments into the reactor comprises a step of compacting and of pushing said fragments using a screw.

11. Method according to any of claims 1 to 10, **characterized in that** said reactor is a vertical reactor and **in that** said wood fragments introduced into said reactor are fed by gravity toward an extraction zone near the bottom of said reactor.

12. Method according to any of claims 1 to 11, **characterized in that** said reactor is horizontal and **in that** the step of exposing comprises a step of transporting said fragments between an introduction zone and an extraction zone within said reactor.

13. Method according to any of claims 1 to 12, **characterized in that** said step of separating comprises a step of centrifuging said wood fragments and/or a step of passing said wood fragments and the residual vapor into a cyclone.

14. Method according to any of claims 1 to 13, **characterized in that** it comprises a step of moistening the combustible material to improve the ability thereof to be converted into pellets.

15. Combustible material obtained by using the method according to claim 5, having an increase by weight less than or equal to 10% after complete immersion in a container of water for one hour and drainage for 30 minutes.
